Europäisches Patentamt

European Patent Office

Office européen des brevets

(19)

(11) Numéro de publication: **0 195 726**
**B1**

(12) # FASCICULE DE BREVET EUROPEEN

(45) Date de publication du fascicule du brevet:
20.12.89

(21) Numéro de dépôt: 86400595.4

(22) Date de dépôt: 20.03.86

(51) Int. Cl.⁴: **G 01 K 17/00, G 01 K 1/14,
C 21 B 7/06, F 27 D 21/00**

(54) **Dispositif de mesure du flux de chaleur émis par un four métallurgique.**

(30) Priorité: 22.03.85 FR 8504313

(43) Date de publication de la demande:
24.09.86 Bulletin 86/39

(45) Mention de la délivrance du brevet:
20.12.89 Bulletin 89/51

(84) Etats contractants désignés:
AT BE CH DE GB IT LI LU NL SE

(56) Documents cités:
FR-A- 2 251 935
LU-A- 41 774
US-A- 3 715 441
US-A- 3 955 419
US-A- 4 358 953

ISA TRANSACTIONS, vol. 9, no. 2, 1970, pages 94-103,
Instrument Society of America, Pittsburgh, Pa.US; M.R.
WOOL et al.: "Measurement of convective and radiative
heat fluxes at the surface of an ablative material"

(73) Titulaire: **SOCIETE FRANCAISE d'ETUDES
d'INSTALLATIONS SIDERURGIQUES (S.O.F.R.E.S.I.D.),
59, rue de la République, F-93108 Montreuil Cedex (FR)**

(72) Inventeur: **Dhelft, Patrick, 33, rue Briante, F-77200 Torcy
(FR)**

(74) Mandataire: **Armengaud Aîné, Alain, Cabinet
ARMENGAUD AINE 3 Avenue Bugeaud, F-75116 Paris
(FR)**

**Description**

La présente invention concerne une méthode de mesure du flux de chaleur émis par un four métallurgique. Cette invention peut s'appliquer, en particulier, au contrôle de l'activité d'un four métallurgique ou au contrôle de l'usure des réfractaires d'un tel four. En particulier, cette invention se propose d'apporter une méthode permettant de suivre, avec une bonne précision l'usure ou la dégradation d'une paroi réfractaire, en particulier dans des creusets contenant des métaux liquides, et plus spécialement les creusets de hauts fourneaux.

Dans les systèmes actuellement utilisés pour l'application mentionnée ci-dessus, le seul contrôle pouvant être effectué est celui des températures en paroi, et éventuellement, du flux de chaleur global émis par le four vers les systèmes de refroidissement. Cependant, l'expérience montre que les contrôles ainsi réalisés sont inefficaces pour les raisons suivantes:

dans une paroi réfractaire d'une épaisseur très importante (par exemple 1 à 2,5 m), la température d'extrados varie peu, puisqu'elle ne dépend que du flux et de la résistance thermique du pisé de blocage de ladite paroi. Comme la résistance thermique du pisé est faible, et que les variations de flux sont normalement lentes, et d'importance relative faible, on ne peut pas détecter de grosses variations de température. On peut montrer que, pour un gros creuset de haut fourneau, par exemple, la température d'extrados du réfractaire passe de 75°C à 100°C environ, au cours de la campagne.

Par ailleurs, la mesure elle-même n'est pas précise, pour différentes raisons: qualité du contact thermocouple-réfractaire, présence de condensats divers (eau, solvant...). L'écart de mesure peut, de façon aléatoire, atteindre plusieurs degrés, donc une fraction importante de l'intervalle de 25°C à contrôler.

En outre, la mesure des pertes thermiques globales ne constitue pas un moyen plus fiable étant donné qu'elle ne donne qu'une valeur sous-estimée du flux moyen. Dans un tel procéde, on ajoute à l'imprécision des mesures de température, l'imprécision des débits de fluides de refroidissement et les échanges entre le système de refroidissement et le milieu ambiant.

Enfin, l'usure des réfractaires n'étant pas également répartie, on peut avoir une faible zone fortement dégradée, sans effet marqué sur le flux total. C'est ainsi que l'on a pu voir des hauts fourneaux percer, alors que les flux captés par le refroidissement étaient en phase décroissante.

Selon une autre solution, on peut envisager la mesure du flux aux points les plus sensibles du four. A cet effet, on peut placer deux thermocouples à des profondeurs différentes dans le réfractaire du four. Un tel procédé présente les mêmes inconvénients que celui qui consiste à mesurer la température de l'extrados de la paroi réfractaire, c'est-à-dire une grande imprécision des mesures, à laquelle s'ajoute l'imprécision sur l'implantation des soudures actives des thermocouples. On a envisagé d'utiliser des flux-mètres, employés en génie atomique et étalonnés en laboratoire; malheureusement, ces flux-mètres se sont révélés trop fragiles et peu adaptés aux flux devant être contrôlés. En outre, ils devaient être placés sur l'enveloppe du four, ce qui ne constitue pas un emplacement idéal.

Une autre technique a été envisagée qui consiste à réaliser une cartographie de l'usure des réfractaires par un procédé de thermographie infrarouge. Malheureusement, cette technique ne convient pas à tous les types de refroidissement; elle ne peut être utilisée que par campagne, en coupant le refroidissement du réfractaire et enfin, les nombreux obstacles qui existent autour des fours masquent une surface non négligeable de l'appareil.

Par ailleurs, la publication ISA Transactions, vol. 9, n° 2, 1970, pages 94–103, Instrument Society of America, Pittsburgh, Pa. US; M.R. Wool et al.: «Measurement of convective and radiative heat fluxes at the surface of an ablative material» décrit une méthode de mesure de température au travers d'une paroi réfractaire à l'aide d'un moyen constitué par un barreau de réfractaire de même nature que celui de la paroi et qui est muni de rainures disposées dans sa surface périphérique, recevant des thermocouples différentiels, et disposé dans un logement prévu à cet effet dans le réfractaire de la paroi. Cependant, un tel dispositif ne peut pas être utilisé pour des mesures de flux thermiques car il présente l'inconvénient majeur d'entraîner des perturbations dans la répartition de flux faibles au sein du massif très important du garnissage réfractaire d'un four.

En conséquence, la présente invention se propose d'apporter une méthode de mesure du flux de chaleur émis par un four métallurgique à l'aide d'un barreau de réfractaire de même nature que les matériaux constituant le garnissage du four, ce barreau comportant des rainures disposées sur sa surface périphérique pour recevoir des thermocouples différentiels et positionnées dans un logement prévu à cet effet dans le réfractaire du four caractérisée en ce que l'on colle les thermocouples différentiels dans leurs rainures respectives, afin d'assurer un contact optimum avec le matériau de base constituant ledit barreau et en ce que l'on positionne ledit barreau dans son logement, après étalonnage préalable, avec interposition d'une masse de contact adaptée au réfractaire et à la position dans le four.

L'invention vise également un barreau pour la mise en œuvre de la méthode définie ci-dessus, qui est constitué d'un réfractaire de même nature que celui du garnissage du four, qui comporte des rainures disposées sur sa surface périphérique recevant des thermocouples différentiels, et qui est positionné dans un logement prévu à cet effet dans le réfractaire du four, avec interposition d'une masse de contact, caractérisé en ce qu'il est muni d'un alésage ou d'une cannelure assurant l'évacuation de l'air et de l'excès de masse de contact, lors de sa mise en place dans son logement.

D'autres caractéristiques de cette invention ressortiront de la description faite ci-après en référence au dessin annexé, qui en illustre un exemple de réalisation non limitatif. Sur le dessin:

la fig. 1 est une vue en élévation d'un barreau mis en œuvre dans la méthode selon l'invention.

la fig. 2 est une vue en coupe verticale transversale de la fig. 1.

la fig. 3 est une vue schématique illustrant l'application de l'invention au contrôle de l'usure des réfractaires de paroi d'un creuset de haut fourneau et

la fig. 4 est une représentation schématique d'un système d'étalonnage du barreau selon l'invention.

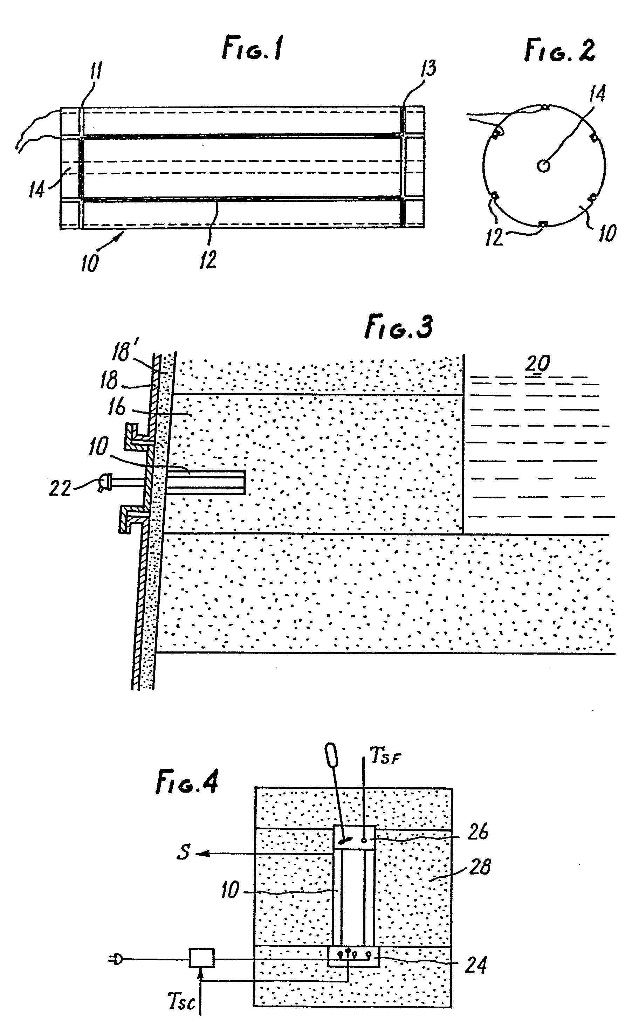

En se référant au dessin, et plus particulièrement aux fig. 1 et 2, on voit que la mesure du flux de chaleur selon l'invention s'effectue à l'aide d'un dispositif qui se présente sous la forme d'un barreau cylindrique 10 constitué d'un réfractaire de même nature que les matériaux réfractaires constituant le garnissage du four à équiper. Ce barreau 10 est muni d'un certain nombre de rainures usinées sur sa surface périphérique, dans lesquelles sont logés des thermocouples différentiels tels que 12, qui sont de préférence montés en série, afin d'augmenter la valeur du signal de sortie. Les thermocouples 12 sont collés dans leurs rainures respectives, afin d'assurer un contact optimum avec le matériau de base.

Le barreau 10 est positionné dans un logement (fig. 3) prévu à cet effet dans le garnissage réfractaire 16 d'un four métallurgique. Dans cet exemple d'application non limitatif, le four est un haut fourneau dont on n'a représenté que la partie inférieure, avec le creuset 20, le pisé de blocage 18' du garnissage réfractaire de la tôlerie extérieure 18. On interpose, entre le barreau 10 et les parois de son logement dans le réfractaire 16 une masse de contact qui est adaptée au réfractaire et à la position dans le four. Le barreau 10 est pourvu d'un alésage interne 14, axial de préférence, assurant l'évacuation de l'air et de l'excès de la masse de contact, lors de la mise en place du barreau dans son logement. Sur la figure, on a désigné par les références 11 et 13 les soudures froides et chaudes des thermocouples 12. Le câble de mesure sort du four à l'aide de moyens classiques. Le signal de sortie des thermocouples, prélevé en 22 donne une force électromotrice qui est fonction du flux de chaleur traversant le barreau 10.

Le barreau décrit ci-dessus et mis en œuvre par le procédé selon l'invention doit être étalonné.

On peut, dans ce but, utiliser un four de mesure des conductivités par la méthode comparative. On peut aussi utiliser un système particulier permettant d'effectuer l'étalonnage en usine, ce qui est plus simple et règle le problème des pièces de rechange.

La fig. 4 représente un exemple de réalisation d'un système d'étalonnage selon l'invention. Il s'agit d'un montage calorimétrique qui comporte une enceinte calorifugée 28, recevant le barreau 10 de mesure du flux selon l'invention, devant être étalonné. Cette enceinte 28 comporte une source chaude 24, constituée par exemple d'un flan de cuivre muni d'un chauffage électrique régulé pour élever la température du flan à une valeur connue, à + ou − 0,2 °C près, avec la puissance nécessaire, suivant la nature du four où doit être installé le barreau 10. L'enceinte 28 comporte en outre un calorimètre métallique 26, constitué d'une coupelle cylindrique mince munie d'un agitateur et d'une sonde thermométrique, contenant une masse connue et adaptée d'eau distillée ou d'un autre fluide à point d'ébullion plus élevé. Enfin, le système comporte un moyen de traitement des signaux, dans lequel sont enregistrées:

– la force électro-motrice S engendrée par les thermocouples du barreau 10;

– la différence des températures source chaude $T_{sc}$, source froide $T_{sf}$

– la température du fluide contenu dans le calorimètre;

– la dérivée de la température du calorimètre, qui donne, à un facteur près, la valeur du flux reçu par le calorimètre.

Grâce à ce système, on peut tracer de façon simple la courbe fem = f(flux), pour le domaine concernant l'application considérée.

L'invention apporte notamment les avantages suivants:

a) elle permet une mesure du flux de chaleur dans le garnissage réfractaire lui-même, et elle n'apporte pas de discontinuité notable susceptible de perturber le flux, donc la valeur de la mesure et la pérennité du garnissage réfractaire du four;

b) elle met en œuvre un barreau robuste, facile à fabriquer, et donc peu coûteux;

c) le barreau mis en œuvre permet de délivrer un signal de sortie de niveau convenable, qui peut être facilement étalonné grâce à un dispositif d'étalonnage peu coûteux, adapté aux caractéristiques du four où doit être monté le système de mesure du flux.

Comme on l'a décrit et mentionné ci-dessus, la méthode de mesure objet de cette invention peut être appliquée au contrôle de l'usure des réfractaires, par exemple des creusets des hauts-fourneaux, le barreau de mesure du flux étant positionné dans la paroi réfractaire.

Selon une autre application de l'invention, le barreau de mesure du flux de chaleur est installé sous la sole d'un four métallurgique, notamment d'un haut fourneau, pour contrôler l'activité du four, en particulier du creuset d'un haut-fourneau.

## Revendications

1. Méthode de mesure du flux de chaleur émis par un four métallurgique à l'aide d'un barreau (10) de réfractaire de même nature que les matériaux constituant le garnissage du four, ce barreau comportant des rainures disposées sur sa surface périphérique pour recevoir des thermo-couples différentiels et positonnées dans un logement prévu à cet effet dans le réfractaire du four, caractérisée en ce que l'on colle les thermocouples différentiels (12) dans leurs rainures respectives, afin d'assurer un contact optimum avec le matériau de base constituant ledit barreau et en ce que l'on positionne ledit barreau dans son logement, après étalonnage préalable, avec interposition d'une masse de contact adaptée au réfractaire et à la position dans le four.

2. Méthode selon la revendication 1, caractérisée en ce que l'étalonnage préalable est réalisé à l'aide d'un système calorimétrique, qui comprend une enceinte calorifugée (28) recevant le barreau (10) à tester; une source chaude (24) munie d'un moyen de chauffage régulé, permettant d'élever la température de cette source chaude avec une puissance fonction de la nature du four où doit être installé le barreau teste; un calorimètre métallique à eau (26), et un ensemble de traitement de signaux qui enregistre la force électromotrice engendrée par les thermo-couples du barreau, la différence de température source chaude – source froide, la température de l'eau du calorimètre, et la dérivée de cette température, qui donne, à un facteur près, le flux reçu par le calorimètre.

3. Barreau pour la mise en œuvre de la méthode selon la revendication 1 qui est constituée d'un réfractaire de même nature que celui du garnissage du four, qui comporte des rainures, disposées sur sa surface périphérique, recevant des thermocouples différentiels, et qui est positionné dans un logement prévu à cet effet dans le réfractaire du four, avec interposition d'une masse de contact, caractérisé en ce qu'il est muni d'un alésage ou d'une cannelure (14) assurant l'évacuation de l'air et de l'excès de masse de contact, lors de sa mise en place dans son logement.

4. Barreau selon la revendication 3, caractérisé en ce que les thermocouples (12) sont montés en série pour accroître la valeur du signal de sortie.

5. Barreau selon l'une des revendications 3 ou 4, caractérisé en ce qu'il est placé dans la paroi réfractaire d'un four métallurgique, contenant ou non du métal liquide, notamment d'un creuset de haut-fourneau, pour assurer le contrôle de l'usure des réfractaires, par évaluation de l'épaisseur résiduelle desdits réfractaires.

6. Barreau selon l'une des revendications 3 ou 4, caractérisé en ce qu'il est installé sous la sole d'un four métallurgique, notamment d'un haut-fourneau, afin de contrôler l'activité du haut-fourneau.

**Patentansprüche**

1. Verfahren zum Messen des von einem metallurgischen Ofen abgegebenen Wärmeflusses mit einem Stab (10) aus einem feuerfesten Material derselben Art wie das Material der Auskleidung des Ofens, wobei der Stab auf seiner Mantelfläche Einkerbungen zur Aufnahme von differentiellen Thermoelementen aufweist und in einer dafür vorgesehenen Aufnahmeöffnung in der feuerfesten Auskleidung des Ofens angeordnet ist, dadurch gekennzeichnet, dass die differentiellen Thermoelemente (12) in die jeweiligen Einkerbungen eingeklebt werden, um einen optimalen Kontakt mit dem Grundmaterial des Stabes zu gewährleisten, und dass der Stab nach einer vorausgegangenen Eichung unter Zwischenlage eines Kontaktmaterials, das an die feuerfeste Auskleidung und die Anordnung im Ofen angepasst ist, in die dafür vorgesehene Aufnahmeöffnung eingebracht wird.

2. Verfahren nach Anspruch 1, dadurch gekennzeichnet, dass die vorausgehende Eichung mit einem kalorimetrischen System durchgeführt wird, aufweisend
   – eine wärmeisolierende Umhüllung (28) zur Aufnahme des zu prüfenden Stabes (10),
   – eine Wärmequelle (24) mit einem regelbaren Heizelement, das es ermöglicht, die Temperatur der Wärmequelle entsprechend der Heizleistung des Ofens, in den der zu prüfende Stab eingebaut werden soll, zu erhöhen,
   – ein mit Wasser gefülltes Metall-Kalorimeter (26) und
   – eine Signalauswerteeinheit, die das Elektrizität erzeugende Potential der Thermoelemente des Stabes, den Temperaturanstieg bzw. den Temperaturabfall der Wärmequelle, die Wassertemperatur des Kalorimeters und die Ableitung dieser Temperatur aufnimmt, wobei diese Temperatur ein Mass für den vom Kalorimeter aufgenommenen Wärmefluss ist.

3. Stab zur Durchführung des Verfahrens nach Anspruch 1, bestehend aus einem feuerfesten Material der selben Art wie die Auskleidung des Ofens, mit Einkerbungen auf seiner Mantelfläche zur Aufnahme der differentiellen Thermoelemente, wobei der Stab unter Zwischenlage eines Kontaktmaterials in eine dafür vorgesehene Aufnahmeöffnung in der feuerfesten Auskleidung des Ofens angeordnet ist, gekennzeichnet durch eine Bohrung oder einen Kanal (14) zur Evakuierung der Luft und zum Austritt von Kontaktmaterial, wenn der Stab in die Aufnahmeöffnung eingebracht wird.

4. Stab nach Anspruch 3, dadurch gekennzeichnet, dass die Thermoelemente (12) in Reihe geschaltet sind, um das Ausgangssignal zu verstärken.

5. Stab nach einem der Ansprüche 3 oder 4, gekennzeichnet durch seine Anordnung in der feuerfesten Wand eines metallurgischen Ofens, der beispielsweise flüssiges Metall enthalten kann, insbesondere im Schmelztiegel eines Hochofens, um die Abnutzung der feuerfesten Auskleidung durch die Bestimmung der verbleibenden Dicke der Auskleidung zu überwachen.

6. Stab nach einem der Ansprüche 3 oder 4, gekennzeichnet durch seine Anordnung unter dem Boden eines metallurgischen Ofens, insbesondere eines Hochofens, zur Überwachung des Betriebszustandes des Hochofens.

**Claims**

1. A method of measuring the heat flux emitted by a metallurgical furnace by means of a bar (10) of refractory material of the same nature as the materials constituting the lining of the furnace, this bar comprising grooves disposed in its peripheral surface for receiving differential thermocouples and being positioned in a seating provided for this purpose in the refractory material of the furnace, characterized in that the differential thermocouples (12) are glued in their respective grooves in order to assure optimum contact with the basic material constituting said bar and in that said bar is positioned in its seating, after prior calibration, with the interposition of a contact material adapted to the refractory material and to the position in the furnace.

2. A method according to Claim 1, characterized in that the prior calibration is carried out by means of a calorimetric system, which comprises a thermally insulated enclosure (28) receiving the bar (10) to be tested, a hot source (24) provided with a controlled heating means enabling the temperature of this hot source to be raised with a power which is a function of the nature of the furnace in which the bar tested is to be installed, a metal calorimeter with water (26), and a signals processing assembly which records the electromotive force produced by the thermocouples of the bar, the difference in temperature between hot source and cold source, the temperature of the water of the calorimeter, and the derivative of this temperature which gives, except for a factor, the flux received by the calorimeter.

3. Bar for carrying out the method according to Claim 1, which is constituted of a refractory material of the same nature as that of the lining of the furnace, which comprises grooves disposed on its peripheral surface, receiving differential thermocouples, and which is positioned in a seating provided for this purpose in the refractory material of the furnace, with the interposition of a contact material, characterized in that it is provided with a passage or duct (14) assuring evacuation of the air and the excess of contact material during its placing in its seating.

4. Bar according to Claim 3, characterized in that the thermocouples (12) are mounted in series to increase the magnitude of the output signal.

5. Bar according to one of Claims 3 or 4, characterized in that it is placed in the refractory wall of a metallurgical furnace, containing or not containing liquid metal, notably a blast furnace crucible, for assuring the monitoring of the wear of the refractory materials, by evaluation of the remaining thickness of said refractory materials.

6. Bar according to one of Claims 3 or 4, characterized in that it is installed beneath the hearth of a metallurgical furnace, notably a blast furnace, for the purpose of monitoring the activity of the blast furnace.

## Fɪɢ.1

## Fɪɢ.2

## Fɪɢ.3

## Fɪɢ.4